(19) Europäisches Patentamt
European Patent Office
Office européen des brevets

(11) Veröffentlichungsnummer: **0 004 850**
**A2**

(12) # EUROPÄISCHE PATENTANMELDUNG

(21) Anmeldenummer: **79100075.5**

(22) Anmeldetag: **11.01.79**

(51) Int. Cl.[2]: **C 09 J 3/16**
C 08 L 63/00

(30) Priorität: **22.04.78 DE 2817752**

(43) Veröffentlichungstag der Anmeldung:
**31.10.79 Patentblatt 79/22**

(84) Benannte Vertragsstaaten:
**BE CH DE FR GB IT LU NL SE**

(71) Anmelder: **SCHERING AKTIENGESELLSCHAFT Berlin und Bergkamen**
**Postfach 15**
**Waldstrasse 14 D-4619 Bergkamen(DE)**

(72) Erfinder: **Imöhl, Wolfgang, Dr.**
**Bornstrasse 16**
**D-4750 Unna(DE)**

(72) Erfinder: **Retzlaff, Jürgen**
**Büscherstrasse 54**
**D-4619 Bergkamen(DE)**

(54) **Klebstofflösungen auf Epoxidharzbasis und ihre Verwendung.**

(57) Verwendung von Klebstofflösungen, bestehend aus mehrwertigen Glycidylverbindungen, einem bei Raumtempratur zur Polyadduktbildung mit den Epoxidgruppen fähigen Härtungsmittel oder Härtungsmittelgemisch mit mindestens zwei reaktiven Aminwasserstoffatomen pro Molekül, Härtungsbeschleunigern, einem Polyamidharz auf Basis eines heterocyclischen Amins, einem geeigneten Lösungsmittel und üblichen Hilfsmitteln für die Verklebung bon Weichmacher enthaltenden Polyvinylchloridcopolymerisaten mit organischen oder anorganischen Werkstoffen.

EP 0 004 850 A2

BEZEICHNUNG GEÄNDERT
siehe Titelseite



Klebstofflösungen mit verbesserten Eigenschaften

Die Erfindung betrifft die Verwendung von Klebstofflösungen zum Verkleben von Weichmacher enthaltendem Polyvinylchlorid mit sich selbst oder anderen Werkstoffen mit Bindemitteln auf Epoxidharzbasis, welche einen zusätzlichen Gehalt an Polyamidharzen enthalten.

Die schnelle und rationelle Kaschierung von anorganischen und organischen Werkstoffen, insbesondere Holz- und Spanplatten mit Folien, insbesondere Folien aus (auch größere Anteile) Weichmacher enthaltendem Polyvinylchlorid oder Polyvinylchlorid-Copolymerisaten sowie Acrylat-Butadien-Styrol(ABS)-Copolymeren, ist bereits seit einigen Jahren wesentlicher Bestandteil der industriellen Fertigung von Verbundwerkstoffen, insbesondere in der Möbelindustrie.

Bindemittel, die üblicherweise für das Verbinden dieser Materialien eingesetzt werden, sind größtenteils wasserdispergierte thermoplastische Harze wie Polyvinylacetat (PVAC), Polyacrylate oder deren Copolymere.

Sind die mit diesen Bindemitteln erzielbaren Eigenschaften in manchen Fällen auch ausreichend, entsprechen sie jedoch überall dort nicht den Anforderungen der Praxis, wo eine hochwärmestandfeste Verklebung erforderlich ist, wie z. B. bei der Herstellung von Phono- oder Fernsehmöbeln, Tischen und Wandverkleidungen.

Nachteilig ist auch, daß diese Bindemittel infolge ihres Wassergehaltes eine Quellung der Holzteilchen in den Spanplatten verursachen. Dies wirkt sich insbesondere bei der Kaschierung von Spanplatten mit grobstrukturierten Oberflächen mit dünnen Folien nachteilig auf das Erscheinungsbild derartiger Verbundteile aus, da die durch die Quellung verstärkte Grobstruktur der Spanplattenoberfläche durch die Folie hindurch erkennbar ist.

Versuche mit anderen Bindemitteln, diese Nachteile zu überwinden, waren bisher von geringem Erfolg. Übliche Epoxidklebstoffe, mit denen bereits versucht wurde, obengenannte Nachteile zu überwinden, zeigen an manchen Kunststoffen, insbesondere an den häufig verwendeten Folien aus halbhartem und weichem PVC, keine befriedigende Haftung. Insbesondere die mangelnde Anfangshaftung dieser Klebstoffe, d. h. die Haftung unmittelbar nach dem Verklebungsprozeß bis zur Dauer von ca. 1 - 2 Tagen ist ein bedeutender Nachteil, da während dieser Zeit die Klebfuge nicht belastet werden darf. Die dadadurch erforderliche Zwischenlagerung vor der Weiterverarbeitung stellt einen weiteren Arbeitsgang dar und erfordert außerdem eine z. T. erhebliche Kapazität an Lagerraum.

Aufgabe der vorliegenden Erfindung ist es, diese Nachteile zu überwinden und Klebstoffe zum Verkleben von insbesondere Polyvinylchloridfolien, welche auch größere Anteile an Weichmachern enthalten können mit vorzugsweise Holzwerkstoffen zu finden, welche eine für die Praxis ausreichende Wärmestandfestigkeit aufweisen, und welche auch bei Verwendung von dünnen Folien und grobstrukturierten Werkstoffoberflächen optisch einwandfreie Oberflächen ergeben.

Diese Aufgabe wird erfindungsgemäß durch Verwendung der im Anspruch gekennzeichneten Klebstofflösungen gelöst.

Es wurde gefunden, daß bei Verwendung der erfindungsgemäßen Klebstofflösungen neben einer optischen Verbesserung der Oberflächen der verklebten Folien eine Erhöhung der Klebfestigkeiten von Polyvinylchloridfolien an anorganischen und organischen Werkstoffen, wie z. B. Asbestzement, Metallen, Holz und insbesondere Spanplatten, in der Anfangsphase und vor allem bei den problematischen höheren Temperaturen zu erzielen ist.

Dies ist umso überraschender, da bekannt ist, daß durch die jeweiligen Komponenten allein oder durch getrennten Auftrag der einzelnen Komponenten keine befriedigende Haftung an den genannten Materialien zu erzielen ist.

Als erfindungsgemäß mitzuverwendende Epoxidharzverbindungen kommen handelsübliche Glycidylverbindungen mit mehr als einer Epoxidgruppe pro Molekül in Betracht, die sich von ein- und mehrwertigen, ein- und mehrkernigen Phenolen, insbesondere Bisphenolen, sowie Novolaken, ableiten. Eine umfangreiche Aufzählung dieser Di- und Polyphenole findet sich im Handbuch "Epoxidverbindun-

gen und Epoxidharze" von A. M. Paquin, Springer Verlag, Berlin, 1958, Kapitel IV, und Lee, Neville "Handbook of Epoxy Resins", 1967, Chapter 2.

Es können auch Mischungen von zwei oder mehreren der Epoxidharze untereinander verwendet werden. Bevorzugt werden Glycidylverbindungen auf Basis von Bisphenol A (4,4-Dihydroxydiphenylpropan-2,2) mit Epoxidwerten von 0,1 bis 0,55 eingesetzt.

Härtungsmittel und Glycidylverbindungen werden erfindungsgemäß vorzugsweise in etwa äquivalenten Mengen, d. h., bezogen auf aktive Aminwasserstoffatome und reaktive Epoxidgruppen eingesetzt. Es ist aber natürlich auch möglich, Härtungsmittel oder Glycidylkomponente im Überschuß zu verwenden. Die jeweiligen Mengen richten sich nach den gewünschten Endeigenschaften des Reaktionsproduktes.

Als Härtungsmittel für die Epoxidharze können erfindungsgemäß alle bei Raumtemperatur zur Polyadduktierung fähigen Aminverbindungen mit mindestens zwei reaktiven Aminwasserstoffatomen wie z. B. Polyamine, wie z. B. Diäthylentriamin, Triäthylentetramin, Tetraäthylenpentamin, Äthylendiamin, Propylendiamin, Butylendiamin, deren N,N- sowie N,N'-Alkylsubstitutionsprodukte insbesondere N,N-Dimethylaminopropylamin, Polyaminoamide und Imidazolingruppen enthaltende Polyaminoamide auf Basis polymerisierter höherer ungesättigter Fettsäuren und üblichen Polyaminen verwendet werden.

Eine umfangreiche Aufzählung der verwendbaren Härtungsmittel findet sich in Lee, Neville "Handbook of Epoxy Resins" MC Graw Hill Book Company, New York, 1967, Chapter 7 - 10.

Es können auch Mischungen von zwei oder mehreren der Härtungsmittel untereinander verwendet werden. Bevorzugt werden Mischungen aus Polyaminoamiden auf Basis üblicher Polyamine und polymerisierter höherer ungesättigter natürlicher oder künstlicher monomerer Fettsäuren mit 16 bis 22, vorzugsweise 18 Kohlenstoffatomen, wie sie beispielsweise aus den deutschen Patentschriften 972 757, 1 074 856 und den deutschen Auslegeschriften 1 041 246, 089 544, 1 106 495, 1 295 869, 1 250 918 bekannt sind und aliphatischen Polyaminen der allgemeinen Formel $R(R')N-(CH_2)_x-NH_2$, in der R und R' unabhängig voneinander ein Alkylrest mit 1 bis 5 Kohlenstoffatomen, insbesondere $CH_3$, und x eine Zahl von 2 bis 5, insbesondere 3, sein kann, verwendet.

Der Anteil an dem aliphatischen Polyamin sollte dabei 10 bis 90 Gew.-%, insbesondere 20 - 70 Gew.-%, bezogen auf das gesamte Härtungsmittel, betragen.

Als erfindungsgemäß mitverwendete Polyamidharze kommen an und für sich bekannte Kondensationsprodukte in Betracht aus A) dimeren Fettsäuren, B) cycloaliphatischen, aromatischen araliphatischen, insbesondere aliphatischen Dicarbonsäuren mit 6 bis 10 C-Atomen, C) cycloaliphatischen, araliphatischen, aromatischen und insbesondere aliphatischen Diaminen mit 2 bis 20, insbesondere 2 bis 10 C-Atomen und D) wenigstens einem Diamin der allgemeinen Formel

$$XN \leqslant Z \geqslant NH$$

wobei Z die Bedeutung

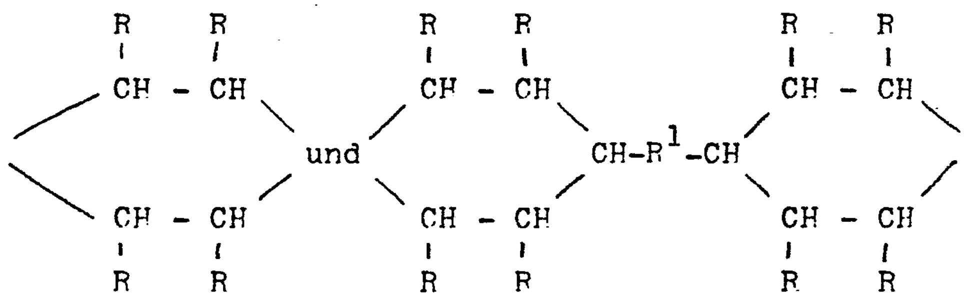

und

und

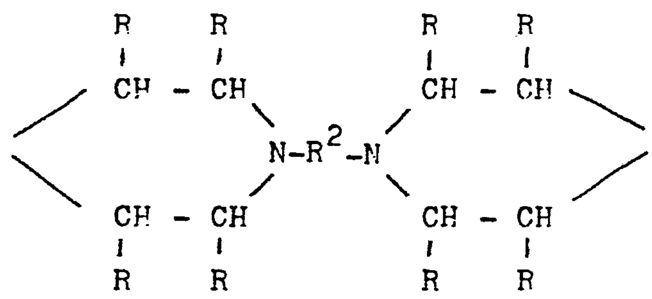

haben kann, mit R = H oder ein Alkylrest mit 1 bis 6 Kohlenstoffatomen, wobei $R^1$ und $R^2$ ein zweiwertiger aliphatischer Kohlenwasserstoffrest mit wenigstens einem Kohlenstoffatom ist und x die Bedeutung H, $R'NH_2$, $R'OH$ hat, worin R ein Alkylrest mit 1 bis 6 Kohlenstoffatomen sein kann.

Erfindungsgemäß bevorzugt werden Polyamide verwendet, in welchen das Diamin gemäß D) 2,3-Di-(4-piperidyl)propan ist und äquivalente Mengen an Säure- und Aminkomponenten eingesetzt werden.

Das Verhältnis von Epoxidharz und Härtungsmittel zu Polyamidharz ist je nach gewünschten Endeigenschaften innerhalb relativ weiter Grenzen variabel. Zur Erzielung eines befriedigenden Kompromisses zwischen Adhäsion an insbesondere Weichmacher enthaltendem PVC und einer ausreichenden Wärmestandfestigkeit der Verklebung sollte der Anteil des Polyamidharzes innerhalb der Grenzen

von 5 Gew.-% bis 20 Gew.-%, vorzugsweise von 10 bis 15 Gew.-%, bezogen auf Epoxidharz und Härtungsmittel liegen. Die auf dem vorliegenden Gebiet üblichen organischen und/oder anorganischen Zusätze, wie Hilfsmittel, Thixotropierungsmittel, Verdünner, Flexibilisatoren, Füll- und Farbstoffe und Pigmente, sowie Beschleuniger, können je nach Erfordernis zugesetzt werden. Als Lösungsmittel sind die für Glycidyläther und die Härtungsmittel bzw. Polyamide üblichen aromatischen Kohlenwasserstoffe, Ester, Alkohole, Chlorkohlenwasserstoffe, Ketone sowie deren Mischungen verwendbar.

Die Polyamidharze können entweder erst in einem geeigneten Lösungsmittel gelöst und der Harz- bzw. Härterkomponente zugesetzt werden oder der Lösung einer der beiden Komponenten zugesetzt und gelöst werden.

Beispiel

Herstellung der Harzkomponente

7 Gewichtsteile eines handelsüblichen festen Polyamidharzes, in welchem als Aminkomponente Bis-(4-piperidyl)-propan-1,3 mitverwendet wurde, werden unter Rühren in einem Lösungsmittelgemisch, bestehend aus 7 Gewichtsteilen Methanol und 21 Gewichtsteilen Methylenchlorid, aufgelöst. Dieser Mischung werden unter Rühren 32 Gewichtsteile flüssiges Epoxidharz auf Basis Bisphenol A mit einem Epoxidwert von 0,53 zugefügt. Anschließend werden 33 Gewichtsteile feine unvorbehandelte Kreide zugemischt.

Herstellung der Härterkomponente

Zu 20 Gewichtsteilen eines Polyaminoamids auf der Basis von dimerer Fettsäure und Triäthylentetramin mit der Aminzahl von 250 werden 5 Gewichtsteile N,N-Dimethylaminopropylamin und 15 Gewichtsteile Toluol gegeben und zusammen mit 60 Gewichtsteilen feiner unvorbehandelter Kreide vermischt.

50 Gewichtsteile der oben hergestellten Harzkomponente werden mit 50 Gewichtsteilen der Härterkomponente intensiv gemischt und zur Verklebung von Spanplatten mit handelsüblichen Dekorfolien eingesetzt.

Nach der Abbindezeit wird die Schälfestigkeit an folienkaschierten Spanplatten geprüft, wobei die 3 cm breiten und 15 mm starken Folienstreifen in einem Winkel von 90 ° von den Spanplatten in einer Zugprüfungsmaschine mit einer Geschwindigkeit von 50 mm/min abgezogen werden.

Zu dem in der Tabelle nicht berücksichtigten Erscheinungsbild der Oberfläche der Verbundteile ist festzustellen, daß bei der Verklebung von 0,15 mm starker handelsüblicher Folie und Spanplatten mit Schnitzeldecklagen bei Verwendung des erfindungsgemäßen Systems ein Verbund mit ausgezeichneter Oberfläche erhalten wird, während die Oberfläche bei Verwendung des handelsüblichen Vinylacetat-Copolymeren unruhig und blumig wirkt.

Schälfestigkeit in N/mm an Folien-Spanplatten-Verklebungen

| Folientyp | PVC-Folie, transparent, 0,3 mm stark, mit 27 % Weichmacher | | | handelsübliche Dekorfolie mit Holzmaserung, 0,2 mm stark | | | |
|---|---|---|---|---|---|---|---|
| Prüfung bei | Raumtemperatur (20-25 °C) | | | Raumtemperatur (20-25 °C) | | | 50 °C |
| Abbindezeit bei Raumtemperatur bis zur Prüfung | 16 h | 3 Tage | 4 Wochen | 16 h | 3 Tage | 4 Wochen | 3 Tage |
| System 1 Erfindungsgem. Beispiel | 1,2 | 1,4 | 1,8 | 1,0 | 1,3 | 1,7 (teilw.M) | 1.0 |
| Vergleichsbeispiel auf Basis eines handelsüblichen Vinylacetat-Copolymeren | 1,0 | 1,0 | 1,0 | 0,9 | 1,0 | 1,0 | 0,4 |

M = Materialbruch in der Folie

Patentansprüche:

1. Verwendung von Klebstofflösungen, bestehend aus

A) einer Glycidylverbindung mit mehr als einer Epoxidgruppe im Molekül und

B) einem bei Raumtemperatur zur Polyadduktbildung mit den Epoxidgruppen fähigen Härtungsmittel oder Härtungsmittelgemisch mit mindestens zwei reaktiven Aminwasserstoffatomen pro Molekül und der Mitverwendung von Härtungsbeschleunigern und

C) einem Polyamidharz auf Basis eines heterocyclischen Amins, welches im wesentlichen keine mit Epoxidverbindungen reaktive Gruppen aufweist und

D) einem für die Komponenten A bis C geeigneten Lösungsmittel und gegebenenfalls

E) üblichen Hilfsmitteln, Thixotropierungsmitteln, Verdünnern, Flexibilisatoren, Füll-Farbstoffen und Pigmenten und Beschleunigern

für die Verklebung von Weichmacher enthaltenden Polyvinylchlorid-Copolymerisaten mit organischen oder anorganischen Werkstoffen.

2. Verfahren zur Verbesserung der Eigenschaften von Klebstofflösungen auf Epoxidharzbasis, dadurch gekennzeichnet, daß darin 5 - 20 Gew.-%, bezogen auf Epoxidharz und Härtungsmittel, eines Polyamidharzes

auf Basis eines heterocyclischen Amins, welches im wesentlichen keine mit den Epoxidverbindungen reaktive Gruppen aufweist, mitverwendet werden.